# NEUE EUROPÄISCHE PATENTSCHRIFT

(11) **EP 1 085 237 B2**
(45) Veröffentlichungstag und Bekanntmachung des Hinweises auf die Entscheidung über den Einspruch: **17.03.2010**
(45) Hinweis auf die Patenterteilung: 25.10.2006
(21) Anmeldenummer: 00116855.8
(22) Anmeldetag: 04.08.2000
(51) Int. Cl.: F16H 3/091, F16H 3/00

(54) **Doppelkupplungsgetriebe**
Double clutch gearbox
Boîte de vitesses à double embrayage

(30) Priorität: 18.09.1999 DE 19944879
(43) Veröffentlichungstag der Anmeldung: 21.03.2001
(73) Patentinhaber: Volkswagen Aktiengesellschaft, 38436 Wolfsburg (DE)
(72) Erfinder: Becker, Volker, Dipl-Ing., 38518 Gifhorn (DE); Schreiber, Wolfgang, 38550 Isenbüttel (DE)
(74) Vertreter: Hübsch, Dirk

(56) Entgegenhaltungen:
- EP-A- 0 212 182
- EP-A- 1 052 421
- EP-B- 0 691 486
- DE-A- 3 715 880
- DE-A- 4 122 628
- DE-A- 4 332 466
- DE-A- 19 807 374
- DE-A- 19 809 534
- DE-A- 19 821 164
- DE-B- 1 217 800
- DE-U- 9 114 528
- GB-A- 585 716
- US-A- 4 463 621
- US-A- 4 732 253
- US-A- 4 741 422
- US-A- 5 890 392
- W.MATEK ET AL.,: 'Roloff/Matek, Maschinenelement', 1987, FRIEDR. VIEWEG & SOHN, BRAUNSCHWEIG, ISBN 3528540281 Seite 424
- H:J: FÖRSTER: 'Automatische Fahrzeuggetriebe', 1990, SPRINGER VERLAG, ISBN 354052228 Seiten 272 - 275

## Beschreibung

Die Erfindung betrifft ein Kraftfahrzeug mit einem Doppelkupplungsgetriebe wobei das Doppelkupplungsgetriebe zwei konzentrisch zueinander angeordnete Eingangswellen und eine Abtriebswelle aufweist, wobei die erste und zweite Eingangswelle jeweils über eine erste und zweite Kupplung mit einer Antriebswelle verbindbar sind und die erste Eingangswelle zumindest über ein erstes Zahnradpaar mit der Abtriebswelle und die zweite Eingangswelle zumindest über ein zweites Zahnradpaar mit der Abtriebswelle wirksam verbindbar ist.

Im Stand der Technik sind unterschiedliche ausgebildete Kupplungsgetriebe für Kraftfahrzeuge bekannt. So offenbart die Patentanmeldung P 198 24 415.0 ein Doppelkupplungsgetriebe mit zwei konzentrisch zueinander angeordneten Eingangswellen und einer Abtriebswelle. Die Achsen der beiden Eingangswellen liegen auf einer gemeinsamen Linie, wobei die Eingangswellen selbst sequentiell hintereinander angeordnet sind. Über zwei zwischen den beiden Eingangswellen jeweils angeordnete Kupplungen sind diese beiden Eingangswellen jeweils mit einer Antriebswelle verbindbar, die ebenfalls konzentrisch zu den Eingangswellen angeordnet ist, d. h. die Achse der Antriebswelle ist mit den Achsen der Eingangswelle im wesentlichen identisch. Dies ist dadurch realisiert, daß die Eingangswellen als Hohlwellen ausgeführt sind und die Antriebswelle - als Vollwelle - sich durch die Eingangswellen hindurch erstreckt. Eine wirksame Verbindung zwischen Antriebswelle und Abtriebswelle ist dadurch realisiert, daß zwischen der ersten Eingangswelle und der Abtriebswelle ein erstes Zahnradpaar und zwischen der zweiten Eingangswelle und der Abtriebswelle ein zweites Zahnradpaar jeweils eine entsprechende Gangstufe ausbildet und daher eine Drehmomenten-Übertragung von Antriebswelle auf die jeweilige Eingangswelle und dann über das jeweilige Zahnradpaar auf die Abtriebswelle ermöglicht wird. Über ein nachgestaltetes Differentialgetriebe werden dann die Drehmomente entsprechend auf die Antriebsräder übertragen.

Aus einer weiteren Patentanmeldung, nämlich der P 198 21 164.3 ist ein Doppelkupplungsgetriebe bekannt, das für den Front-Quer-Einbau in einem Kraftfahrzeug geeignet Ist. Dieses Doppelkupplungsgetriebe weist eine Antriebswelle, zwei Eingangswellen und zwei Abtriebswellen auf. Die beiden Eingangswellen sind hier ebenfalls konzentrisch zueinander angeordnet, d. h. die Achsen dieser Eingangswellen liegen auf einer gemeinsamen Linie, allerdings ist die erste Eingangswelle als Vollwelle und die zweite Eingangswelle als Hohlwelle ausgebildet, wobei die erste Eingangswelle innerhalb der zweiten Eingangswelle dann angeordnet ist. Um eine einigermaßen kompakte Bauweise zu realisieren, ist für jede einzelne Abtriebswelle jeweils ein Zahnradpaar vorgesehen, so daß die Eingangswellen jeweils mit den Abtriebswellen wirksam verbindbar sind.

Weiterhin ist ein Doppelkupplungsgetriebe aus der DE-C-196 31 983 bekannt, das ebenfalls zwei Eingangswellen und eine Abtriebswelle aufweist, wobei die Eingangswellen konzentrisch zueinander angeordnet sind, d. h. die Achsen dieser Eingangswellen also auf einer Linie liegen, wobei des weiteren die Eingangswellen wiederum als Hohl- bzw. Vollwelle ausgebildet sind und ineinanderliegerid angeordnet sind. Die beiden Kupplungen, d. h. die erste und die zweite Kupplung zur Verbindung der jeweiligen Eingangswellen mit der Antriebswelle ist sequentiell hintereinander angeordnet und in einem separaten Kupplungsgehäuse vorgesehen.

Die oben beschriebenen Doppelkupplungsgetriebe sind insbesondere für den Front-Quer-Einbau in den Motorraum eines Kraftfahrzeuges geeignet und weniger für den Front-Längs-Einbau. Im Zuge von Gewichtseinsparungen beim Bau von Kraftfahrzeugen und unter ökonomischen und ökologischen Gesichtspunkten sowie unter dem Gesichtspunkt der Verkleinerung der Kraftfahrzeuge selbst, gewinnt die Berücksichtigung einer sehr kompakten Bauweise von Kraftfahrzeugbauteilen, insbesondere Getrieben immer mehr an Bedeutung. So ist - wie oben beschrieben - es nicht sehr vorteilhaft, wenn ein Doppelkupplungsgetriebe mehr als eine Abtriebswelle aufweist, da dies umgehend den ohnehin notwendigen Bauraum noch vergrößert. Desweiteren erfordert die konzentrische Anordnung der Eingangswellen, die nicht ineinanderliegend angeordnet sind, sondern sequentiell hintereinander geschaltet angeordnet sind, einen hohen Bauraum, genauso wie wenn die für die Drehmomenten-Übertragung notwendigen Kupplungen sequentiell hintereinander geschaltet sind. Im Ergebnis darf daher festgehalten werden, dass die im Stand der Technik bekannten Doppelkupplungsgetriebe für den Front-Quer-Einbau in den Motorraum eines Kraftfahrzeuges zwar geeignet, für den Front-Längs-Einbau aber nicht optimal geeignet sind.

Weiterhin ist eine Doppelkupplung bekannt (DE 43 32 466 A1), die bei Schaltgetrieben, insbesondere bei einem 6-gängigen Schaltgetriebe angewendet wird. Die Doppelkupplung weist zwar einen gemeinsamen Kupplungskorb auf, allerdings sind die hier dargestellten Kupplungen im wesentlichen radial zueinander angeordnet, d.h. überlappen sich im wesentlichen In axialer Richtung, so dass in axialer Richtung eine raumsparende Konstruktion realisiert ist.

Der Erfindung liegt daher die Aufgabe zugrunde, das eingangs genannte Kraftfahrzeug derart auszugestalten und weiterzubilden, dass ein Doppelkupplungsgetriebe geschaffen ist, das auch für den Front-Längs-Einbau in den Motorraum eines Kraftfahrzeuges geeignet ist und dessen Herstellungskosten möglichst gering sind.

Die zuvor aufgezeigte Aufgabe Ist nun durch die Kombination der Merkmale des Patentanspruches 1 gelöst. Die erste Eingangswelleist nun als Vollwelle und die zweite Eingangswelle als Hohlwelle ausgebildet und die erste Eingangswelle ist innerhalb der zweiten Eingangswelle angeordnet wobei die Eingangswellen und die Abtriebswelle im wesentlichen parallel zur Fahrzeuglängsrichtung und die erste und zweite Kupplung radial zueinander angeordnet sind und die radial außen liegende Kupplung ist als Anfahrkupplung mit der ersten Gangstufe zugeordneten ersten Eingangswelle verbunden. Durch die Ausgestaltung des Doppelkupplungsgetriebes in der nunmehr beschriebenen Kombination der Merkmale werden entscheidene Vorteile realisiert. Einerseits ist eine kompakte Bauweise des Doppelkupplungsgetriebes in einem Front-Längs-Einbau in den Motorraum eines Kraftfahrzeuges möglich, da die erste Eingangswelle als Vollwelle und die zweite Eingangswelle als Hohlwelle ausgebildet ist und entsprechend ineinander angeordnet sind. Desweiteren ist nur eine Abtriebswelle vorgesehen, die ebenfalls wie die Eingangswellen in Fahrzeuglängsrichtung angeordnet sind. Weiterhin ist entscheidend, daß die notwendigerweise vorzusehenden Kupplungen radial, und eben nicht mehr sequentiell zueinander angeordnet sind, da dies den erforderlichen Bauraum in Fahrzeuglängsrichtung minimiert. Im Ergebnis ist ein sehr kompaktes Doppelkupplungsgetriebe für ein Kraftfahrzeug auf kostengünstige Art und Weise geschaffen, das sich besonders für den Front-Längs-Einbau in einen Motorraum eignet, sowie auch einen hohen Wirkungsgrad, eine geringe Baugröße und geringes Gewicht aufweist und dennoch niedrige Herstellungskosten erfordert.

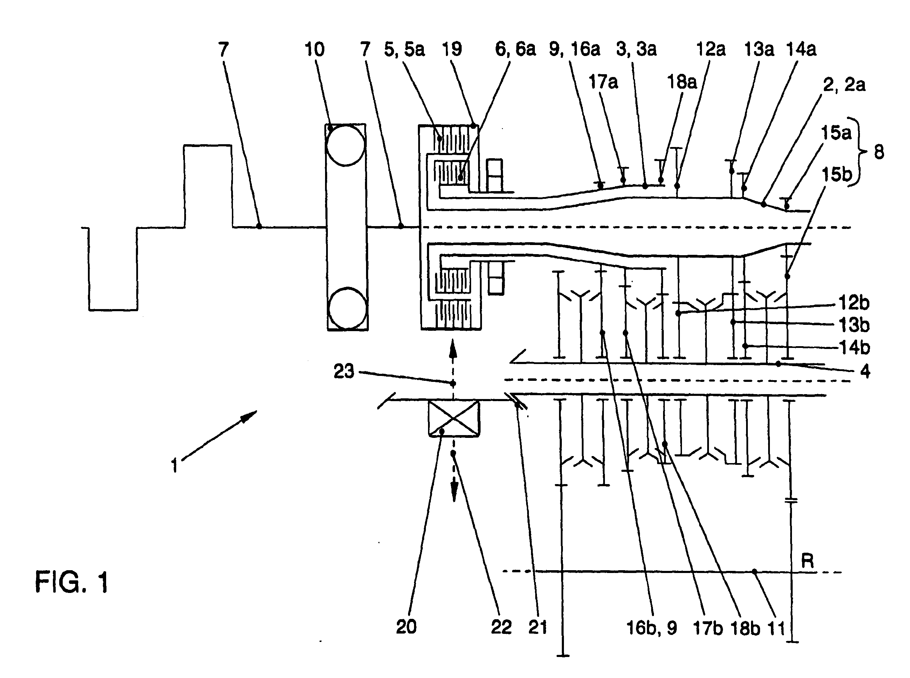

Es gibt nun eine Vielzahl von Möglichkeiten, daß erfindungsgemäße Kraftfahrzeug in vorteilhafter Weise auszugestalten und weiterzubilden. Hierfür darf zunächst auf die dem Patentanspruch 1 nachgeordneten Patentansprüche verwiesen werden. Im folgenden soll nun ein bevorzugtes Ausführungsbeispiel der Erfindung anhand einer Zeichnung sowie der nachfolgenden Beschreibung näher erläutert werden. In der Zeichnung zeigt
Fig. 1 in einer vereinfachten schematischen Darstellung das erfindungsgemäße Doppelkupplungsgetriebe für den Front-Längs-Einbau in einem Kraftfahrzeug.

Die Fig. 1 zeigt in einer sehr vereinfachten schematischen Darstellung ein Doppelkupplungsgetriebe 1 für ein hier nicht näher dargestelltes Kraftfahrzeug. Das Doppelkupplungsgetriebe 1 weist zwei konzentrisch zueinander angeordnete Eingangswellen 2 und 3 und eine Abtriebswelle 4 auf. Die erste Eingangswelle 2 bzw. die zweite Eingangswelle 3 ist jeweils über eine erste und zweite Kupplung 5 bzw. 6 mit einer Antriebswelle 7 verbindbar. Zumindest über ein erstes Zahnradpaar 8 ist die erste Eingangswelle 2 mit der Abtriebswelle 4 wirksam verbindbar, wobei die zweite Eingangswelle 3 zumindest über ein zweites Zahnradpaar 9 mit der Abtriebswelle 4 wirksam verbindbar ist.

Eine sehr kompakte Bauweise wird für das Doppelkupplungsgetriebe dadurch erreicht, daß die erste Eingangswelle 2 als Vollwelle 2a und die zweite Eingangswelle 3 als Hohlwelle 3a ausgebildet ist und die erste Eingangswelle 2 innerhalb der zweiten Eingangswelle 3 angeordnet ist, daß die Eingangswellen 2 und 3 und die Abtriebswelle 4 im wesentlichen parallel zur Fahrzeuglängsrichtung und die erste und zweite Kupplung 5 und 6 radial zueinander angeordnet sind. Dadurch werden entscheidende Vorteile erreicht, nämlich eine sehr kompakte Bauweise für den Front-Längs-Einbau in den Motorraum eines Kraftfahrzeuges für das entsprechende Doppelkupplungsgetriebe 1 erzielt. Die kompakte Bauweise wird dadurch noch verstärkt, daß bestimmte Zahnradpaare durch nur eine Schiebemuffe jeweils kuppelbar sind, was im folgenden noch ausführlicher erörtert werden wird. Eine geringe Längsausdehnung des Doppelkupplungsgetriebes 1 wird insbesondere dadurch erzielt, daß die erste und zweite Kupplung 5 und 6 radial zueinander angeordnet sind, also eben nicht mehr sequentiell hintereinander angeordnet sind.

Fig. 1 zeigt, daß die Antriebswelle 7 über ein Schwingungsdämpfungssystem 10 über die erste bzw. zweite Kupplung 5 und 6 mit der ersten bzw. zweiten Eingangswelle 2 und 3 wirksam verbindbar ist. Hierbei realisiert die erste Kupplung 5 eine wirksame Verbindung zwischen der Antriebswelle 7 und der ersten Eingangswelle 2, wobei die zweite Kupplung 6 eine wirksame Verbindung zwischen der Antriebswelle 7 und der zweiten Eingangswelle 3 realisiert. Gut zu erkennen ist, daß die erste Eingangswelle 2 radial innen liegend in der zweiten Eingangswelle 3 angeordnet ist. Das Schwingungsdämpfungssystem 10, das vzw. als Zweimassenschwingungsdämpfer ausgebildet ist, dient zur akustischen Entkopplung der schwingungstechnisch verbundenen Bauteile.

Das hier dargestellte Doppelkupplungsgetriebe 1 weist insgesamt sieben Vorwärtsgänge auf, wobei zur Realisierung eines Rückwärtsganges R eine separate Nebenwelle 11 vorgesehen ist.

Die erste Eingangswelle 2 weist aufeinanderfolgend die jeweiligen Zahnräder 12a, 13a, 14a und 15a für die 7., 5., 3., 1. Gangstufe auf. Hingegen weist die zweite Eingangswelle 3 aufeinanderfolgend die jeweiligen Zahnräder 16a, 17a und 18a für die 2., 4. und 6. Gangstufe auf.

Die Zahnräder 12a bis 15a der ersten Eingangswelle 2 bzw. die Zahnräder 16a bis 18a der zweiten Eingangswelle 3 kämmen mit den auf der Abtriebswelle 4 entsprechend jeweils angeordneten korrespondierenden Zahnrädern 12b bis 18b. Hierbei wird die erste Gangstufe des Doppelkupplungsgetriebes 1 durch das Zahnradpaar 15a bzw. 15b, die zweite Gangstufe durch das Zahnradpaar 16a bzw. 16b, die 3. Gangstufe durch das Zahnradpaar 14a bzw. 14b, die 4. Gangstufe durch das Zahnradpaar 17a bzw. 17b, die 5. Gangstufe durch das Zahnradpaar 13a bzw. 13b, die 6. Gangstufe durch das Zahnradpaar 18a bzw. 18b und die 7. Gangstufe durch das Zahnradpaar 12a bzw. 12b gebildet. Das erste Zahnradpaar 8 wird durch die Zahnräder 15a und 15b und das zweite Zahnradpaar 9 wird durch die Zahnräder 16a und 16b gebildet.

Um eine besonders kompakte Bauweise des Doppelkupplungsgetriebes 1 zu realisieren, ist für die erste und dritte Gangstufe sowie für die vierte und sechste, die fünfte und siebte sowie die zweite Gangstufe und die Rückwärtsgangstufe jeweils eine gemeinsame Schiebemuffe vorgesehen, welche die genannten Gänge wahlweise schaltet bzw. schalten kann, was hier aber nicht im einzelnen explizit dargestellt ist.

Die beiden Kupplungen, nämlich die erste und zweite Kupplung 5 und 6 sind hier bei der bevorzugten Ausführungsform als naßlaufende Lamellenkupplungen 5a bzw. 6a ausgeführt und bilden eine "kompakte Radialkupplung" mit einem entsprechenden Kupplungsgehäuse 19.

Weiterhin weist die erste Eingangswelle 2 eine hier nicht dargestellte axial verlaufende Bohrung auf, die vzw. zur Druckölversorgung der einzelnen Bauteile des Doppelkupplungsgetriebes 1 dient. Zweckmäßigerweise ist ein entsprechender Ringspalt vorgesehen, über welchen das Kühlöl dem Kupplungsgehäuse 19 zugeführt wird, so daß eine Drucköleinspeisung mit geringen radialen Bauraumbedarf realisiert ist. Vzw. ist hierfür zwischen dem Kupplungsgehäuse 19 und dem nicht näher bezeichneten bzw. nicht dargestellten Getriebegehäuse ein Ringspalt ausgebildet. Die Kupplungen 5 und 6 sind mit der jeweiligen Eingangswelle 2 bzw. 3 über eine entsprechende Steckverzahnung wirksam verbindbar. In den jeweiligen Kupplungskolben der Kupplungen ist vzw. eine Fliehölkompensation vorgesehen. An dem Kupplungsgehäuse 19 kann auch eine Verzahnung zum Antrieb einer Ölpumpe vorgesehen werden, wobei bevorzugt aber ein direkter Ölpumpenantrieb vorgesehen wird.

Der Abtriebswelle 4 ist ein Differentialgetriebe 20 nachgeschaltet, wobei das Differentialgetriebe 20 und die Abtriebswelle 4 über eine Schrägverzahnung 21 entsprechend wirksam verbindbar sind. Ausgehend vom Differentialgetriebe 20 erstrecken sich die Antriebswellen 22 und 23 zu den entsprechend nicht dargestellten Antriebsrädern. Deutlich zu erkennen ist, daß aufgrund des Doppelkupplungsgetriebes 1, Insbesondere des hier realisierten Front-Längs-Einbaus in den Motorraum eines Kraftfahrzeuges eine besonders erhöhte kompakte Bauweise durch die Kombination der eingangs erwähnten Merkmale erreicht ist. Zusammen mit der radialen Anordnugen der Kupplungen 5 und 6 und der in Fahrzeuglängsrichtung angeordneten Eingangswellen 2 und 3 sowie der Abtriebswelle 4 ist bezüglich der Längserstreckung des Doppelkupplungsgetriebes 1 eine erhöht kompakte - Grundbauraum sparende - Anordnung realisiert, die über die "gemeinsamen Schiebemuffen" zwischen bestimmten Gangstufen nochmals erhöht wird.

### BEZUGSZEICHENLISTE

- 1: Doppelkupplungsgetriebe
- 2: erste Eingangswelle
- 2a: Vollwelle
- 3: zweite Eingangswelle
- 3a: Hohlwelle
- 4: Abtriebswelle
- 5: erste Kupplung
- 5a: Lamellenkupplung
- 6: zweite Kupplung
- 6a: Lamellenkupplung
- 7: Antriebswelle
- 8: erstes Zahnradpaar
- 9: zweites Zahnradpaar
- 10: Schwingungsdämpfungssystem
- 11: Nebenwelle
- 12a: Zahnrad
- 12b: Zahnrad
- 13a: Zahnrad
- 13b: Zahnrad
- 14a: Zahnrad
- 14b: Zahnrad
- 15a: Zahnrad
- 15b: Zahnrad
- 16a: Zahnrad
- 16b: Zahnrad
- 17a: Zahnrad
- 17b: Zahnrad
- 18a: Zahnrad
- 18b: Zahnrad
- 19: Kupplungsgehäuse
- 20: Differentialgetriebe
- 21: Schrägverzahnung
- 22: Antriebswelle
- 23: Antriebswelle

## Patentansprüche

1. Kraftfahrzeug mit einem Doppelkupplungsgetriebe (1), wobei das Doppelkupplungsgetriebe (1) zwei konzentrisch zueinander angeordnete Eingangswellen (2,3) und eine Abtriebswelle (4) aufweist, wobei die erste und zweite Eingangswelle (2,3) jeweils über eine erste und zweite Kupplung (5,6) mit einer Antriebswelle (7) verbindbar sind und die erste Eingangswelle (2) zumindest über ein erstes Zahnradpaar (8) mit der Abtriebswelle (4) und die zweite Eingangswelle (3) zumindest über ein zweites Zahnradpaar (9) mit der Abtriebswelle (4) wirksam verbindbar ist, wobei die erste Eingangswelle (2) als Vollwelle (2a) und die zweite Eingangswelle (3) als Hohlwelle (3a) ausgebildet ist und die erste Eingangswelle (2) innerhalb der zweiten Eingangswelle (3) angeordnet ist, wobei die Eingangswellen (2,3) und die Abtriebswelle (4) im wesentlichen parallel zur Fahrzeuglängsrichtung und die erste und zweite Kupplung (5,6) radial zueinander angeordnet sind, und wobei die radial außen liegende Kupplung (5) als Anfahrkupplung mit der der ersten Gangstufe (15) zugeordneten ersten Eingangswelle (2) verbunden ist, wobei sieben Vorwärtsgänge vorgesehen, sind, wobei zur Realisierung eines Rückwärtsganges (R) eine separate Nebenwelle (11) vorgesehen ist und wobei für die erste und dritte Gangstufe sowie für die vierte und sechste, die fünfte und siebte sowie die zweite Gangstufe und die Rückwärtsgangstufe jeweils eine gemeinsame Schiebemuffe vorgesehen ist, welche die genannten Gänge wahlweise schaltet.

2. Kraftfahrzeug nach Anspruch 1, **dadurch gekennzeichnet, daß** die erste Eingangswelle (2) aufeinanderfolgend die jeweiligen Zahnräder (12a, 13a, 14a, 15a) für die siebte, die fünfte, die dritte und die erste Gangstufe aufweist.

3. Kraftfahrzeug nach einem der vorstehenden Ansprüche, **dadurch gekennzeichnet, daß** die zweite Eingangswelle (3) aufeinanderfolgend die jeweiligen Zahnräder (16a, 17a, 18a) für die zweite, vierte und sechste Gangstufe aufweist.

4. Kraftfahrzeug nach einem der vorstehenden Ansprüche, **dadurch gekennzeichnet, daß** die beiden Kupplungen (5, 6) als Lamellenkupplungen (5a, 6a) ausgeführt sind und hierdurch eine kompakte Radialkupplung mit einem Kupplungsgehäuse (19) ausgebildet ist.

5. Kraftfahrzeug nach einem der vorstehenden Ansprüche, **dadurch gekennzeichnet, daß** die erste Eingangswelle (2) eine axial verlaufende Bohrung aufweist.

6. Kraftfahrzeug nach einem der vorstehenden Ansprüche, **dadurch gekennzeichnet, daß** das Kupplungsgehäuse (19) mit einem Ringspalt zum Getriebegehäuse ausgebildet ist.

7. Kraftfahrzeug nach einem der vorstehenden Ansprüche, **dadurch gekennzeichnet, daß** die Kupplungen (5, 6) mit der jeweiligen Eingangswelle (2, 3) über eine entsprechende Steckverzahnung wirksam verbindbar ist.

8. Kraftfahrzeug nach einem der vorstehenden Ansprüche, **dadurch gekennzeichnet, daß** in den jeweiligen Kupplungskolben der Kupplungen (5, 6) eine Fliehölkompensation vorgesehen ist.

9. Kraftfahrzeug nach einem der vorstehenden Ansprüche, **dadurch gekennzeichnet, daß** an dem Kupplungsgehäuse (19) eine Verzahnung zum Antrieb einer Ölpumpe vorgesehen ist.

10. Kraftfahrzeug nach einem der vorstehenden Ansprüche, **dadurch gekennzeichnet, daß** der Antriebswelle (7) ein Schwingungsdämpfungssystem (10) vorgeschaltet ist.

## Claims

1. Motor vehicle having a dual-clutch transmission (1), wherein the dual-clutch transmission (1) has two input shafts (2, 3), which are arranged concentrically with respect to one another, and one drive output shaft (4), wherein the first and second input shafts (2, 3) can each be connected to a drive input shaft (7) by means of a first and a second clutch (5, 6), and the first input shaft (2) can be operatively connected to the drive output shaft (4) at least by means of a first gearwheel pair (8), and the second input shaft (3) can be operatively connected to the drive output shaft (4) at least by means of a second gearwheel pair (9), wherein the first input shaft (2) is embodied as a solid shaft (2a) and the second input shaft (3) is embodied as a hollow shaft (3a), and the first input shaft (2) is arranged within the second input shaft (3), wherein the input shafts (2, 3) and the drive output shaft (4) are arranged substantially parallel to the vehicle longitudinal direction and the first and second clutches (5, 6) are arranged radially with respect to one another, and wherein the radially outer clutch (5) as a starting clutch is connected to the first input shaft (2) which is associated with the first gear step (15), wherein seven forward gears are provided, wherein a separate auxiliary shaft (11) is provided in order to obtain a reverse gear (R) and wherein in each case one common sliding sleeve is provided for the first and third gear steps, and also for the fourth and sixth, for the fifth and seventh and also for the second gear step and the reverse gear step, said sliding sleeve selectively shifting the specified gears.

2. Motor vehicle according to Claim 1, **characterized in that** the first input shaft (2) has, in succession, the respective gearwheels (12a, 13a, 14a, 15a) for the seventh, the fifth, the third and the first gear steps.

3. Motor vehicle according to one of the preceding claims, **characterized in that** the second input shaft (3) has, in succession, the respective gearwheels (16a, 17a, 18a) for the second, fourth and sixth gear steps.

4. Motor vehicle according to one of the preceding claims, **characterized in that** the two clutches (5, 6) are embodied as multi-plate clutches (5a, 6a), and a compact radial clutch having a clutch housing (19) is formed in this way.

5. Motor vehicle according to one of the preceding claims, **characterized in that** the first input shaft (2) has an axially running bore.

6. Motor vehicle according to one of the preceding claims, **characterized in that** the clutch housing (19) is formed with an annular gap with respect to the transmission housing.

7. Motor vehicle according to one of the preceding claims, **characterized in that** the clutches (5, 6) can be operatively connected to the respective input shafts (2, 3) by means of a corresponding intermeshing toothing.

8. Motor vehicle according to one of the preceding claims, **characterized in that** centrifugal oil compensation is provided in the respective clutch pistons of the clutches (5, 6).

9. Motor vehicle according to one of the preceding claims, **characterized in that** a toothing for driving an oil pump is provided on the clutch housing (19).

10. Motor vehicle according to one of the preceding claims, **characterized in that** the drive input shaft (7) is connected upstream of a vibration damping system (10).

## Revendications

1. Véhicule automobile avec une boîte de vitesses à double embrayage (1), la boîte de vitesses à double embrayage (1) comprenant deux arbres d'entrée (2, 3) disposés concentriquement l'un à l'autre et un arbre de sortie (4), le premier et le deuxième arbres d'entrée (2, 3) pouvant être connectés à chaque fois par le biais d'un premier et d'un deuxième embrayages (5, 6) à un arbre d'entraînement (7) et le premier arbre d'entrée (2) pouvant être connecté activement au moins par le biais d'une première paire de roues dentées (8) à l'arbre de sortie (4) et le deuxième arbre d'entrée (3) pouvant être connecté activement au moins par le biais d'une deuxième paire de roues dentées (9) à l'arbre de sortie (4), le premier arbre d'entrée (2) étant réalisé sous forme d'arbre massif (2a) et le deuxième arbre d'entrée (3) étant réalisé sous forme d'arbre creux (3a) et le premier arbre d'entrée (2) étant disposé à l'intérieur du deuxième arbre d'entrée (3), les arbres d'entrée (2, 3) et l'arbre de sortie (4) étant disposés essentiellement parallèlement à la direction longitudinale du véhicule et le premier et le deuxième embrayages (5, 6) étant disposés radialement l'un par rapport à l'autre, et l'embrayage (5) situé radialement à l'extérieur étant connecté en tant qu'embrayage de démarrage au premier arbre d'entrée (2) associé au premier rapport de vitesse (15) sept vitesses de marche avant étant prévues un arbre auxiliaire séparé (11) étant prévu pour réaliser la vitesse de marche arrière (R) et pour le premier et le troisième rapports de vitesse, ainsi que pour le quatrième et le sixième, le cinquième et le septième ainsi que le deuxième rapports de vitesse et le rapport de vitesse de marche arrière, à chaque fois un manchon coulissant commun étant prévu, lequel passe lesdits rapports de manière sélective.

2. Véhicule automobile selon la revendication 1, **caractérisé en ce que** le premier arbre d'entrée (2) présente successivement les roues dentées respectives (12a, 13a, 14a, 15a) pour les septième, cinquième, troisième et premier rapports de vitesse.

3. Véhicule automobile selon l'une quelconque des revendications précédentes, **caractérisé en ce que** le deuxième arbre d'entrée (3) présente successivement les roues dentées respectives (16a, 17a, 18a) pour les deuxième, quatrième et sixième rapports de vitesse.

4. Véhicule automobile selon l'une quelconque des revendications précédentes, **caractérisé en ce que** les deux embrayages (5, 6) sont réalisés sous forme d'embrayages à lamelles (5a, 6a) et de ce fait on obtient un embrayage radial compact avec un carter d'embrayage (19).

5. Véhicule automobile selon l'une quelconque des revendications précédentes, **caractérisé en ce que** le premier arbre d'entrée (2) présente un alésage s'étendant axialement.

6. Véhicule automobile selon l'une quelconque des revendications précédentes, **caractérisé en ce que** le carter d'embrayage (19) est réalisé avec une fente annulaire par rapport au carter de la boîte de vitesses.

7. Véhicule automobile selon l'une quelconque des revendications précédentes, **caractérisé en ce que** les embrayages (5, 6) peuvent être connectés activement avec l'arbre d'entrée respectif (2, 3) par le biais d'une cannelure d'emmanchement correspondante.

8. Véhicule automobile selon l'une quelconque des revendications précédentes, **caractérisé en ce qu'**il est prévu une compensation des fuites d'huile dans le piston d'embrayage respectif des embrayages (5, 6).

9. Véhicule automobile selon l'une quelconque des revendications précédentes, **caractérisé en ce que** l'on prévoit sur le carter d'embrayage (19) une cannelure pour l'entraînement d'une pompe à huile.

10. Véhicule automobile selon l'une quelconque des revendications précédentes, **caractérisé en ce qu'**un système d'amortissement des vibrations (10) est monté avant l'arbre d'entraînement (7).
